**Europäisches Patentamt**

**European Patent Office**

**Office européen des brevets**

(11) Numéro de publication: **0 159 081**
**B1**

## FASCICULE DE BREVET EUROPEEN

(45) Date de publication du fascicule du brevet:
**20.12.89**

(21) Numéro de dépôt: **85200491.0**

(22) Date de dépôt: **01.04.85**

(51) Int. Cl.⁴: **G 01 S 7/52,** G 01 S 7/62,
G 01 S 15/02 // A61B8/00

(54) **Appareil d'exploration de milieux par échographie ultrasonore.**

(30) Priorité: **10.04.84 FR 8405637**

(43) Date de publication de la demande:
**23.10.85 Bulletin 85/43**

(45) Mention de la délivrance du brevet:
**20.12.89 Bulletin 89/51**

(84) Etats contractants désignés:
**BE DE FR GB SE**

(56) Documents cités:
EP-A- 0 106 409
EP-A- 0 140 450
US-A- 3 952 280
US-A- 4 057 049
US-A- 4 167 879
US-A- 4 228 804
US-A- 4 378 596

IBM JOURNAL OF RESEARCH & DEVELOPMENT, vol. 25, no. 1, janvier 1981, pages 71-82, New York, US; K.M. PAN et al.: "Tomographic reconstruction of ultrasonic attenuation with correction for refractive errors" JOURNAL OF THE ACOUSTICAL SOCIETY OF AMERICA, vol. 74, no. 4, octobre 1983, pages 1232-1238,

(73) Titulaire: **LABORATOIRES D'ELECTRONIQUE ET DE PHYSIQUE APPLIQUEE L.E.P., 3, Avenue Descartes, F-94450 Limeil-Brévannes (FR)**

(84) Etats contractants désignés: **FR**

(73) Titulaire: **N.V. Philips' Gloeilampenfabrieken, Groenewoudseweg 1, NL-5621 BA Eindhoven (NL)**

(84) Etats contractants désignés: **BE DE GB SE**

(72) Inventeur: **Bernatets, Jean-Luc, Société Civile S.P.I.D. 209 Rue de l'Université, F-75007 Paris (FR)**

(74) Mandataire: **Landousy, Christian et al, Société Civile S.P.I.D. 209, Rue de l'Université, F-75007 Paris (FR)**

(56) Documents cités: (suite)
**Acoustical Society of America, New York, US; T.L. CHENEVERT et al.: "Aperture diffraction theory applied to ultrasonic attenuation imaging" 1976 IEEE ULTRASONICS SYMPOSIUM PROCEEDINGS, catalogue no. CH1120-5SU, 1976, pages 714-719, New York, US; F.L. LIZZI et al.: "Tissue signature characterization utilizing frequency domain analysis" ACOUSTICAL IMAGING, Proceedings of the International Symposium on Acoustical Imaging, vol. 11, Monterey, 4-7 mai 1981, pages 351-363, Plenum Press, New York, US; J.F. GREENLEAF et al.: "Effects of diffraction on ultrasonic computer-assisted tomography"**

## Description

La présente invention a trait à un appareil d'exploration de milieux et notamment de tissus biologiques par échographie ultrasonore, comportant au moins un transducteur ultrasonore associé à un étage d'émission pour assurer l'émission répétée de signaux ultrasonores et à un étage de réception pour assurer la réception des échos ultrasonores correspondant aux obstacles principaux rencontrés dans leur direction de propagation par les signaux émis, l'étage de réception comprenant un premier circuit de traitement des échos reçus composé essentiellement d'un premier amplificateur relié à l'électrode de sortie du transducteur, d'un dispositif de compensation de gain et d'un dispositif de visualisation en fonction du temps des positions des échos le long de la direction d'exploration et de leurs amplitudes, et, en parallèle sur ce premier circuit de traitement, un deuxième circuit de traitement comprenant un deuxième amplificateur relié à n voies en parallèle comprenant elles-mêmes chacune un circuit de correction des effets de diffraction et un filtre de sélection d'une mince bande de fréquence comprise dans la bande passante du transducteur, lesdites bandes de fréquence étant disjointes ou au moins non superposées.

Un appareil de ce type est décrit dans la demande de brevet français FR-A-2 514 910 déposée le 19 octobre 1981 par la demanderesse. Dans ledit appareil, le premier circuit de traitement est de type classique et est composé essentiellement d'un premier amplificateur des signaux présents sur l'électrode de sortie du transducteur, d'un dispositif de compensation de gain et du dispositif de visualisation. Le deuxième circuit de traitement, qui lui est associé en parallèle, comprend, lui, (a) un deuxième amplificateur également relié à l'électrode de sortie du transducteur, (b) en sortie de ce deuxième amplificateur, un ensemble de n voies en parallèle les unes sur les autres et comprenant chacune successivement un filtre passe-bande (l'ensemble des filtres ainsi prévus étant tel que leurs bandes passantes respectives sont jointives de façon à couvrir approximativement la bande passante du deuxième amplificateur) et un détecteur d'enveloppe (composé lui-même d'un redresseur et d'un filtre passe-bas à constante de temps réglable), (c) en sortie des n voies, un circuit utilisant les signaux de sorties de celles-ci pour évaluer un paramètre qui est un indicateur de dispersion des amplitudes des signaux de fréquence centrale de chaque voie et qui, simultanément, est en corrélation locale directe avec la pente moyenne (appelée coefficient différentiel d'atténuation ultrasonore) de la courbe de variation de l'atténuation ultrasonore dans les tissus explorés en fonction de la fréquence, et (d) en sortie de ce circuit d'évaluation, un circuit de détermination de la valeur de ce coefficient à l'intérieur de chacune des zones délimitées dans les tissus explorés par les échos correspondant aux obstacles rencontrés, les signaux de sortie de ce circuit de détermination assurant la modulation de l'image présentée sur le dispositif de visualisation.

L'appareil répondant à cette structure est intéressant en ce qu'il permet l'obtention d'informations quantitatives, par évaluation locale d'un paramètre qui est en relation directe avec le coefficient différentiel d'atténuation ultrasonore, puis la visualisation directe des valeurs de ce coefficient en échographie de type A ou B. Les résultats obtenus avec cet appareil sont cependant entachés d'un bruit de mesure qui limite leur précision.

Le but de l'invention est de proposer un appareil du type précisé en introduction, mais dans lequel ce bruit de mesure est éliminé ou fortement réduit.

A cet effet, l'appareil selon l'invention est caractérisé en ce que le deuxième amplificateur est constitué par un circuit de contrôle automatique de gain en fonction de la distance des échos dont la sortie est reliée aux n voies à travers un circuit d'hétérodynage comprenant lui-même un oscillateur et un multiplieur, en ce que chaque voie comporte, outre le circuit de correction et le filtre de sélection, un amplificateur logarithmique, et un diviseur effectuant la division du signal reçu par la fréquence du filtre associé, lesdits éléments des voies étant mis en série dans l'ordre mentionné, et en ce que chacun des diviseurs est relié à l'une des n entrées d'un circuit de détermination de valeur moyenne relié lui-même par sa sortie à une entrée du dispositif de visualisation de sorte que le signal de sortie du circuit de détermination est représenté en fonction du temps en synchronisme avec les positions des échos.

Dans le dispositif ainsi proposé, il est prévu de ne considérer, dans les spectres de fréquence instantanés successifs du signal de sortie du transducteur, que de minces tranches de fréquence et, plutôt que de déterminer le coefficient différentiel d'atténuation ultrasonore à partir du résultat de mesure dans l'une seulement de ces bandes de fréquence, d'effectuer une moyenne des résultats de mesure dans plusieurs de ces bandes. En effet, ces résultats de mesure sont affectés d'un bruit important, mais le signal de sortie obtenu après réalisation de cette moyenne est nettement moins perturbé par le bruit de mesure et permet de déterminer le coefficient différentiel d'atténuation ultrasonore avec une précision bien meilleure. Cet effet technique n'est cependant obtenu que si lesdites bandes de fréquence ne sont pas superposées, une étude de la corrélation des bruits dans différentes bandes montrant que leur coefficient de corrélation n'est pratiquement nul que si lesdites bandes de fréquence sont disjointes ou au moins non superposées.

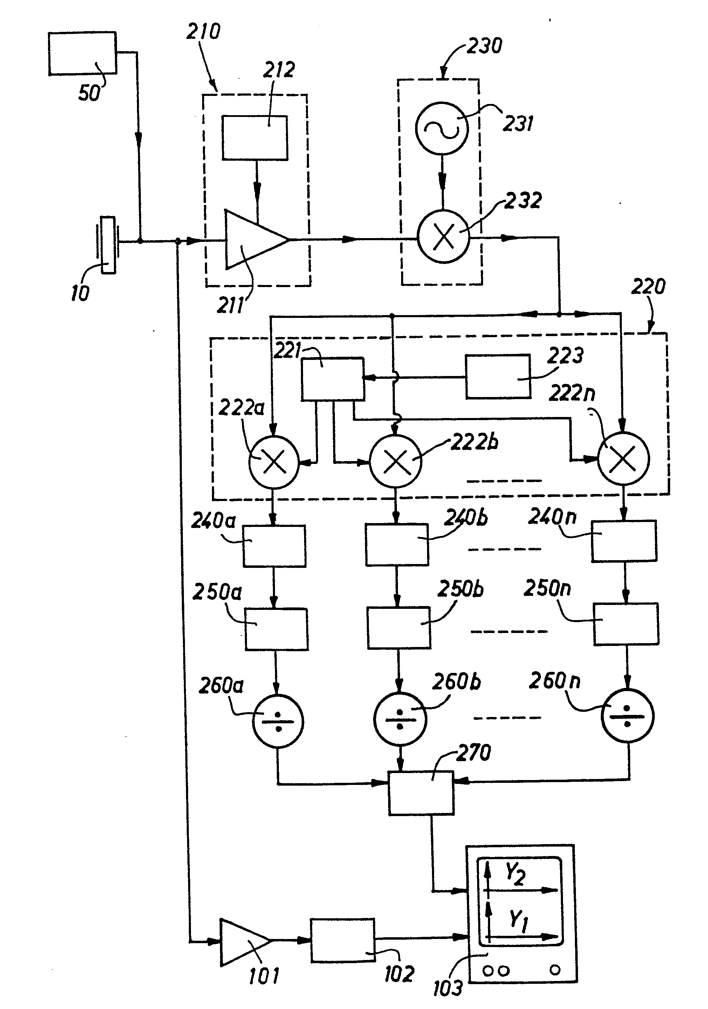

Les particularités et avantages de l'invention apparaîtront maintenant de façon plus précise dans la description qui suit et dans le dessin annexé, donné à titre d'exemple non limitatif et dans lequel la figure unique montre un exemple de réalisation de l'appareil d'exploration de milieux conforme à l'invention.

L'appareil décrit en référence à cette figure est dans le cas présent équipé d'une sonde unique constituant le support d'un transducteur ultrasonore 10 et permettant d'obtenir des échographes de type A. Il va sans dire que l'invention est applicable exactement de la même manière si l'on explore non plus seulement une ligne, mais toute une section plane des tissus soit à l'aide d'une sonde à déplacement manuel ou à déplacement mécanique angulaire dit sectoriel, associée à un écran de visualisation du type radar, soit à l'aide d'une barrette linéaire de p transducteurs ultrasonores définissant un même nombre p de directions d'exploration parallèles dans les tissus à examiner et associée à un circuit de commutation du dispositif de traitement d'échos successivement sur chaque transducteur ou groupe de transducteurs en fonctionnement, soit encore à l'aide d'une barrette de transducteurs dite à balayage électronique sectoriel, également associée à un circuit de commutation du dispositif de traitement ainsi qu'à un réseau de lignes à retard ou de déphaseurs.

Le transducteur 10 est associé d'une part à un étage d'émission 50 destiné à permettre l'émission répétée de signaux ultrasonores par le transducteur dans une direction d'exploration quelconque à travers les tissus à examiner et d'autre part à un étage de réception destiné à assurer le traitement des échos ultrasonores reçus par le transducteur et correspondant aux obstacles principaux rencontrés dans leur direction de propagation par les signaux émis. Ces obstacles sont repérés sur les échogrammes par les échos de grande amplitude qui matérialisent les frontières entre tissus dont on cherche à déterminer les coefficients différentiels d'atténuation ultrasonore.

D'une façon tout à fait classique, l'étage de réception comprend un premier circuit de traitement des échos ultrasonores reçus, composé d'un premier amplificateur 101 (qui est en fait un préamplificateur), d'un dispositif de compensation de gain 102 et d'un dispositif de visualisation 103. Le transducteur 10 est relié par son électrode de sortie à l'entrée de l'amplificateur 101, dont les signaux de sortie traversent le dispositif 102 assurant la compensation de l'amplitude des échos en fonction de la distance puis sont visualisés sur le dispositif 103, sous la forme d'une échographie de type A, sur un axe correspondant à la direction principale de propagation du transducteur 10. L'étage de réception comprend également un deuxième circuit de traitement, placé en parallèle sur le premier et composé d'un circuit 210 de contrôle automatique de gain en fonction de la distance des échos, prévu à la suite de l'électrode de sortie du transducteur 10, et d'un circuit d'hétérodynage composé d'un oscillateur 231 et d'un multiplieur 232, puis, en sortie de ce circuit, de n voies en parallèle comprenant chacune en série un circuit 220 de correction des effets de diffraction, un filtre 240a à 240n de sélection d'une mince bande de fréquence comprise dans la bande passante du transducteur, un amplificateur logarithmique 250a à 250n et un diviseur 260a à 260n dont la sortie est reliée à l'une des n entrées d'un circuit 270 de détermination de valeur moyenne relié lui-même par sa sortie à l'entrée du dispositif de visualisation 103. Chaque diviseur 260i (i variant de a à n) divise son signal d'entrée par $F_C + \Delta F_i$, où $F_C$ est la fréquence de l'oscillateur 231 et $\Delta F_i$ la fréquence centrale de la bande de fréquence sélectionnée par le filtre 240i, cette fréquence $F_C + \Delta F_i$ étant donc la fréquence correspondant initialement au signal qui sortira de la voie i.

Le fonctionnement de l'étage de réception est le suivant: une fois la correction de gain en fonction du temps effectuée, la bande de fréquence du signal ainsi obtenu en sortie du circuit 210 est ramenée en bande de base par mélange de ce signal dans le multiplieur 232 avec la sortie de l'oscillateur 231, puis après correction des effets de diffraction filtrée dans les filtres passe-bande 240a à 240n des n voies. L'intensité de l'énergie ultrasonore dans la bande de fréquence correspondant à chacune de ces voies étant proportionnelle à $e^{-\beta (F_C + \Delta F_i)d}$ où $\beta$ est le coefficient différentiel d'atténuation ultrasonore et d la distance des tissus, on dispose en sortie des n diviseurs de n signaux dont l'amplitude est en corrélation locale directe avec la pente moyenne $\beta$ de la courbe de variation de l'atténuation ultrasonore dans les tissus explorés en fonction de la fréquence. Si l'on cherchait alors à exprimer la valeur de l'énergie dans chaque bande sélectionnée, comme cette valeur I est proportionnelle à $e^{-\beta (F_C + \Delta F_i)d}$, les courbes $I_{dB} = f(d)$ seraient, les deux autres paramètres étant supposés constants, des droites dont les pentes moyennes reflètent directement — si les unités sont correctement choisies — les valeurs d'atténuation ultrasonore.

Si l'on choisit plutôt d'effectuer dans le circuit 270 une moyenne, éventuellement pondérée, par exemple par des coefficients tenant compte de l'énergie dans chaque bande de fréquence, de la sortie des n voies (ou de la sortie d'un certain nombre de ces voies), le signal de sortie du circuit 270 est aussi une droite dont la pente moyenne fournit une évaluation du coefficient $\beta$, mais ce signal est beaucoup moins perturbé par le bruit de mesure que chacun des signaux individuels de sortie des voies. On a donc pratiquement éliminé ou tout au moins très fortement réduit ce bruit.

Les signaux de sortie du dispositif de compensation de gain 102 et du diviseur 260 modulent alors l'image présentée sur le dispositif de visualisation 103, de la façon suivante dans l'exemple ici décrit: l'image comprend d'une part l'échogramme classique de type A fourni par le premier circuit de traitement et envoyé sur une première voie $Y_1$ du dispositif 103, d'autre part une courbe en paliers affichée sur une deuxième voie $Y_2$ de ce dispositif et représentant les différentes valeurs du coefficient d'atténuation ultrasonore entre les frontières définies par l'échogramme de la voie $Y_1$ (ces frontières correspondent aux principaux obstacles rencontrés dans les tissus et sont donc matérialisées par les échos de grande amplitude de cet échogramme de la voie $Y_1$).

Le circuit 220 de correction des effets de diffraction est composé en général d'une mémoire 221 et de multiplieurs 222a à 222n. Cette mémoire, commandée par un circuit d'horloge 223, contient les signaux de correction nécessaires en fonction de la distance, qui doivent être envoyés vers les multiplieurs 222a à 222n et dont les valeurs ont été préalablement stockées à la suite d'une phase de calibration préliminaire. Pour cette phase de calibration, il suffit de prendre en compte, dans le cas d'un transducteur non focalisant, les réponses échographiques du transducteur choisi lorsque celui-ci est placé en face d'un plan réflecteur métallique situé successivement à toutes les distances du transducteur correspondant aux profondeurs usuelles d'examen échographiques, ou, dans le cas le plus fréquemment rencontré d'un transducteur focalisant, les réponses échographiques obtenues par utilisation de fantômes dont on connaît parfaitement les caractérisitques ultrasonores, les réponses ainsi obtenues permettant l'introduction des coefficients de correction dans la mémoire 221, ici de type PROM.

On précisera également qu'un circuit classique de contrôle automatique de gain comprend un amplificateur à gain variable 211, commandé par le circuit de commande de gain proprement dit 212. Pour la précision de la mesure d'énergie qui est effectuée conformément à l'invention, il est souhaitable d'immobiliser ce gain temporairement, le temps d'effectuer réellement la mesure, entre deux instants $t_1$ et $t_2$. Ce résultat est obtenu en prévoyant, dans le circuit 210 de contrôle automatique de gain, l'action d'une fenêtre temporelle pendant laquelle se produit la suspension de la variation du gain de l'amplificateur.

**Revendication**

1. Appareil d'exploration de milieux et notamment de tissus biologiques par échographie ultrasonore, comportant au moins un transducteur ultrasonore (10) associé à un étage d'émission (50) pour assurer l'émission répétée de signaux ultrasonores et à un étage de réception pour assurer la réception des échos ultrasonores correspondant aux obstacles principaux rencontrés dans leur direction de propagation par les signaux émis, l'étage de réception comprenant un premier circuit de traitement des échos reçus composé essentiellement d'un premier amplificateur (101) relié à l'électrode de sortie du transducteur, d'un dispositif de compensation de gain (102) et d'un dispositif de visualisation (103) en fonction du temps des positions des échos le long de la direction d'exploration et de leurs amplitudes, et, en parallèle sur ce premier circuit de traitement, un deuxième circuit de traitement comprenant un deuxième amplificateur (210) relié à n voies en parallèle comprenant elles-mêmes chacune un circuit (220) de correction des effets de diffraction et un filtre (240a–240n) de sélection d'une mince bande de fréquence comprise dans la bande passante du transducteur, lesdites bandes de fréquence étant disjointes ou au moins non superposées, ledit appareil étant caractérisé en ce que le deuxième amplificateur est constitué par un circuit (211, 212) de contrôle automatique de gain en fonction de la distance des échos dont la sortie est reliée aux n voies à travers un circuit d'hétérodynage comprenant lui-même un oscillateur (231) et un multiplieur (232), et en ce que chaque voie comporte, outre le circuit de correction (220) et le filtre de sélection (240a–240n), un amplificateur logarithmique (250a–250n), et un diviseur (260a–260n) effectuant la division du signal reçu par la fréquence du filtre associé, lesdits éléments des voies étant mis en série dans l'ordre mentionné, et en ce que chacun des diviseurs (260a–260n) est relié à l'une des n entrées d'un circuit de détermination (270) de valeur moyenne relié lui-même par sa sortie à une entrée du dispositif de visualisation de sorte que le signal de sortie du circuit de détermination (270) est représenté en fonction du temps en synchronisme avec les positions des échos.

**Claim**

1. An apparatus for the ultrasonic echographic scanning of media, notably biological tissues, comprising at least one ultrasonic transducer (10) which is associated with a transmitter stage (50) for the repeated transmission of ultrasonic signals and with a receiver stage for receiving the ultrasonic echos which correspond to the principal obstacles encountered by the transmitted signals in their propagation direction, said receiver stage comprising a first circuit for the processing of the echos received which comprises essentially a first amplifier (10) which is connected to the output electrode of the transducer, a gain compensation device (102) and a device (103) for displaying the positions of the echos in the propagation direction as a function of time as well as the amplitudes thereof, and also comprising a second processing circuit which is connected parallel to said first processing circuit and which comprises a second amplifier (210) which is connected to n parallel channels, each of which comprises a circuit (220) for the correction of diffraction effects and a filter (240a–240n) for selecting a narrow frequency band which is situated within the pass-band of the transducer, which frequency bands are disjunct or at least non-overlapping, which apparatus is characterized in that the second amplifier is formed by a circuit (211, 212) for automatic gain control as a function of the distance of the echos whose output is connected to the n channels via a heterodyne circuit which itself comprises an oscillator (231) and a multiplier (232), in that each channel comprises, in addition to the correction circuit (220) and the selection filter (240a–240n), a logarithmic amplifier (250a–250n) and a divider (260a–260n) which divides the signal received by the frequency of the associated filter, which elements of the channels are connected in series in the stated order, and in that each of the dividers (260a–260n) is connected to one of the n inputs of a mean value determination circuit (270) which itself is connected, by way of its output, to an input of the display device so that the output signal of the determination circuit (270) is represented as a function of time in synchronism with the positions of the echos.

## Patentanspruch

1. Gerät zur Untersuchung von Medien und insbesondere von biologischen Geweben mittels Ultraschall-Echographie, mit wenigstens einem Ultraschall-Wandler (10), der einer Stufe (50) zum Gewährleisten des wiederholten Aussendes von Ultraschallsignalen und einer Stufe zum Gewährleisten des Empfangs von Ultraschallechos entsprechend den in der Fortpflanzungsrichtung der ausgesandten Signale befindlichen grösseren Hindernissen zugeordnet ist, wobei die Empfangsstufe eine erste Bearbeitungsschaltung der empfangenen Echos, die im wesentlichen aus einem ersten Verstärker (101) in Verbindung mit der Ausgangselektrode des Wandlers, einem Verstärkungsausgleicher (102) und einem zeitabhängigen Bildwiedergabegerät (103) der Positionen der Echos entlang der Untersuchungsrichtung und ihrer Amplituden besteht, und parallel zu dieser ersten Bearbeitungsschaltung eine zweite Bearbeitungsschaltung mit einem zweiten Verstärker (210) enthält, der mit n parallelen Kanälen verbunden ist, die selbst wieder je eine Brechnungseinflußkorrekturschaltung (220) und ein Selektionsfilter (240a–240n) zum Wählen eines schmalen im Wandlerdurchlaßband enthaltenen Frequenzbandes enthalten, wobei diese Frequenzbänder nicht aneinander anschliessen oder wenigstens nicht überlagert sind, dadurch gekennzeichnet, daß der zweite Verstärker aus einer vom jeweiligen Abstand der Echos abhängigen automatischen Verstärkungsregelschaltung (211, 212) besteht, deren Ausgang über eine Überlagerungsschaltung mit selbst einem Oszillator (231) und einem Multiplizierer (232) mit den n Kanälen verbunden ist, und daß jeder Kanal neben der Korrekturschaltung (220) und dem Selektionsfilter (240a–240n) einen logarithmischen Verstärker (250a–250n) und einen Teiler (260a–260n) enthält, der das empfangene Signal durch die Frequenz des zugeordneten Filters teilt, wobei die Elemente dieser Kanäle in der genannten Reihenfolge in Reihe geschaltet sind, und daß jeder Teiler (260a–260n) mit einem der n Eingänge einer Mittelwertbestimmungsschaltung (270) verbunden ist, deren Ausgang an einen Eingang des Bildwiedergabegeräts derart angeschlossen ist, dass das Ausgangssignal der Bestimmungsschaltung (270) zeitabhängig und synchron mit den Echopositionen dargestellt wird.